# EUROPEAN PATENT APPLICATION

(11) **EP 3 542 919 A1**
(43) Date of publication of application: **25.09.2019**
(21) Application number: 19163341.1
(22) Date of filing: 18.03.2019
(51) Int. Cl.: B21D 26/14, B21D 39/03, B21D 53/30, B60B 3/04

(54) **VEHICLE WHEEL MANUFACTURED BY MAGNETIC PULSE WELDING**

(30) Priority: 19.03.2018 IT 201800003732
(71) Applicant: MW Italia S.r.l., 10098 Rivoli (TO) (IT)
(72) Inventor: GALLIO, Giorgio, 10126 Torino (IT); PERRIS MAGNETTO, Gabriele, 10098 Rivoli (Torino) (IT); MOREL, Matthieu, 20720 Homblières (FR); DOS SANTOS, Baptiste, 02100 Saint Quentin (FR); JOUAFFRE, Denis, 02100 Harly (FR)
(74) Representative: Vanzini, Christian

(57) **Abstract**

Method for manufacturing a vehicle wheel, comprising the following steps:
providing a rim (2) made of metal sheet,
providing a disc (3) made of metal material, comprising a cover part (31) and a connection part (32), protruding axially from the cover part (31), wherein on the connection part (32) is obtained a plurality of recesses (34), distributed in the circumferential direction of the connection part (32),
interference-fitting the connection part (32) of the disc (3) to a radially inner surface of the rim (2), and
applying a magnetic pulse to deform areas (28) of the rim (2) respectively superimposing the recesses (34) of the connection part (32), so that the disc (3) is held in rotation and axially by said deformed areas (28) of the rim (2).

## Description

The present invention refers to a wheel of a motor vehicle comprising a rim made of metal sheet and a disc made of metal material assembled to one another.

In the field of assembled wheels, different methods are known for making the rim and the disc integral with each other. These include known mechanical connection systems such as rivets or the like, structural adhesives or welding techniques of various kinds.

One of the objects of the present invention is to propose an alternative method for the production of assembled wheels.

The object of the invention is a method for manufacturing a wheel for vehicles, comprising the following steps:
providing a rim made of metal sheet, comprising, on its axially outer side, an outer flange, an outer bead seat and a retaining hump, as well as a rim well connected to the outer bead seat through the retaining hump,
providing a disc made of metal material, comprising a cover part and a connection part protruding axially from the cover part, wherein the cover part comprises a plurality of spokes angularly spaced extending radially outwards from a central portion of the cover part, wherein, on the connection part, a plurality of recesses is obtained, said recesses being distributed in the circumferential direction of the connection part in such a way that each recess is angularly aligned with a respective spoke,
interference-fitting the connection part of the disc to a radially inner surface of the rim, and
applying a magnetic pulse to deform an area of the rim, respectively superimposing the recess of the connection part in such a way that the disc is rotationally and axially held by said deformed area of the rim, as well as by the interference-fitting between the connection part of the disc and the radially inner surface of the rim.

In the method according to the invention the magnetic pulse is applied only in the recesses of the connection part, which are aligned with the spokes of the disc. Such spokes thus absorb the radial thrust imparted by the deformation of the rim, preventing unwanted deformation or breakage of the peripheral part of the disc.

The present invention also has as its object a wheel obtained by a method according to the invention, and including
a rim made of metal sheet, comprising on its axially outer side an outer flange, an outer bead seat and a retaining hump, as well as a rim well connected to the outer bead seat through the retaining hump, and
a disc made of metal material, comprising a cover part and a connection part protruding axially from the cover part, wherein the cover part comprises a plurality of spokes angularly spaced and extending radially outwards from a central portion of the cover part, wherein on the connection part a plurality of recesses is obtained, said recesses being distributed in the circumferential direction of the connection part in such a way that each recess is angularly aligned with a respective spoke,
wherein the connection part of the disc is interference-fitted to a radially inner surface of the rim, and
wherein the rim has a plurality of deformed areas respectively superimposing the recesses of the connection part in such a way that the disc is rotationally and axially held by said deformed area of the rim, as well as by the interference-fitting between the connection part of the disc and the radially inner surface of the rim.

Preferred embodiments of the invention are defined in the dependent claims, which are intended as an integral part of the present description.

Features and advantages of the wheel according to the invention will become more apparent in the following detailed description of some embodiments of the invention, made with reference to the accompanying drawings, provided purely by way of illustrative and nonlimiting example, wherein:
- figures 1a and 1b are respectively a perspective view and a cross-sectional view of a wheel disc according to the invention;
- figures 2a and 2b are respectively a perspective view and a cross-sectional view showing the disc of figure 1a fitted onto a rim;
- figures 3a and 3b are respectively a perspective view and a cross-sectional view showing the wheel after magnetic pulse welding;
- figure 4 is a cross-sectional view representing an alternative way to make a recess in the disc to carry out the magnetic pulse welding;
- figures 5 and 6 are perspective views of a disc and a wheel according to an embodiment wherein the disc is obtained by casting;
- figures 7 and 8 are perspective views, respectively overall and detailed, of a disc according to a further embodiment; and
- figure 9 is a cross-sectional view of the wheel of figure 6.

In the following description, "axial direction" means a direction parallel to the wheel axis. The indications "inward" and "outward", relative to the axial direction, refer to the condition of installation of the wheel on the vehicle, where "inward" means "toward the vehicle" and "outward" means "away from the vehicle".

In the drawings, a wheel for vehicles according to the invention is indicated collectively at 1.

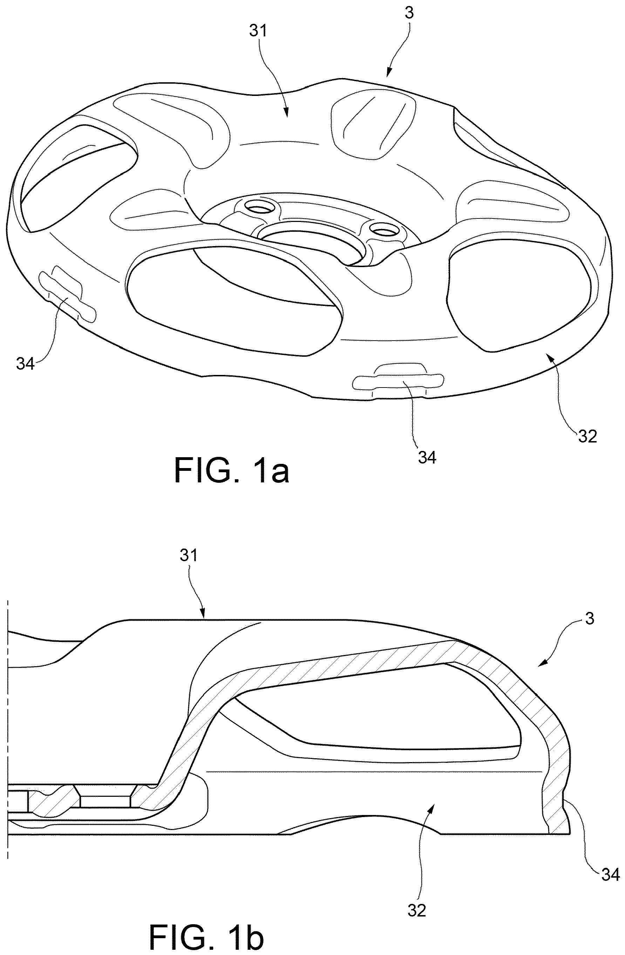

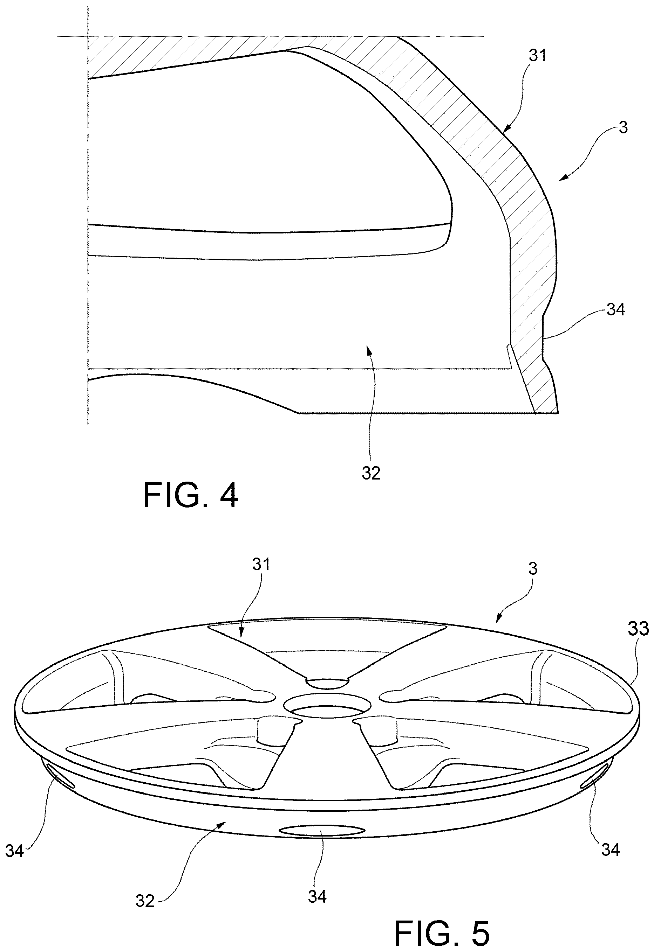

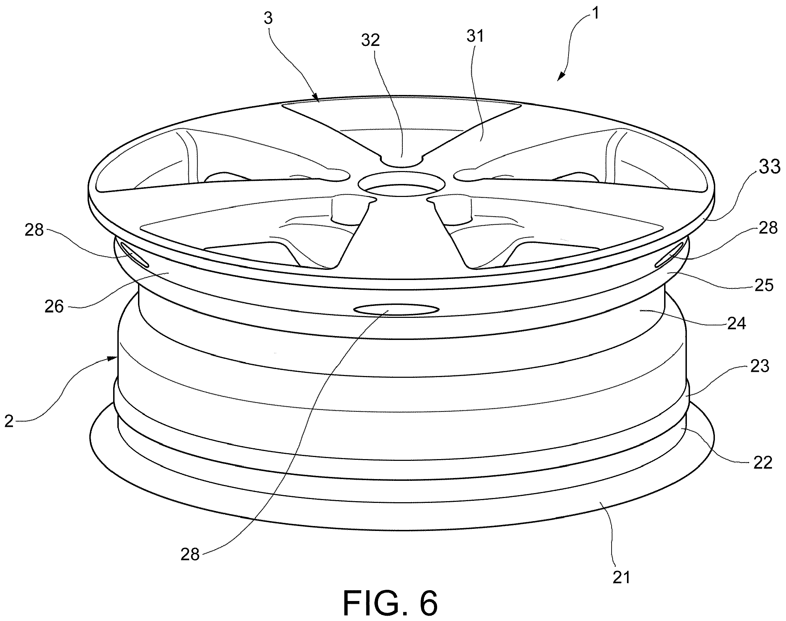

The wheel 1 comprises a rim 2 made of metal sheet, e.g. steel or aluminum, and made e.g. by rolling and welding, and a disc 3, which in the example in figures 1-4 is made of metal sheet, e.g. steel or aluminum, for example by stamping and shearing. In the example in figures 5 and 6, the disc, still indicated at 3, is instead made of aluminum alloy for example by mold casting.

The rim 2 comprises conventionally, in succession along the axial direction from the inside to the outside and connected to each other, an inner flange 21, an inner bead seat 22, an inner retaining hump 23, a rim well 24, an outer retaining hump 25, an outer bead seat 26 and an outer flange 27.

The disc 3 is of the spoked type and comprises a central portion for connecting to an axle hub (not shown), from which a plurality of angularly spaced spokes extends outward. The radially outer ends of the spokes are interconnected by a peripheral connecting ring which extends concentrically with the axis of the wheel 1. The connecting ring is applied and attached to an inner annular surface of the rim 2.

In general, in the disc 3, a cover part 31 may be defined, arranged on the axially outer side of the rim 2, and which, in the illustrated example, is formed by the central part of the disc, by the spokes and by the peripheral ring that interconnects the spokes, and a peripheral connection part 32 protruding axially inward from the cover part 31 and inserted coaxially within the rim 2, and which in the example in figures 1-4 is formed by the peripheral ring of the disc.

With reference in particular to figures 1a and 1b, on the connection part 32 of the disc 3, a plurality of recesses 34 is obtained, distributed in the circumferential direction of the connection part. In particular, the recesses 34 are distributed in such a way as to be angularly equidistant from each other. Moreover, the recesses 34 are distributed in such a way that each recess is angularly aligned with a respective spoke.

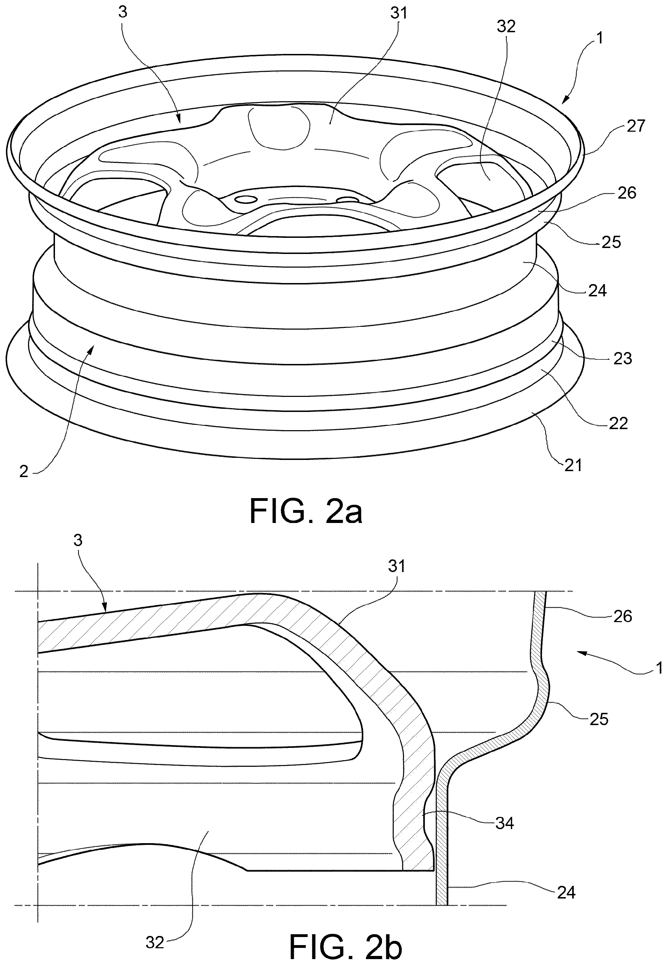

With reference to figures 2a and 2b, the disc 3 is interference-fitted on the rim 2, by coupling the connection part 32 with a radially inner surface of the rim 2, in particular with an inner surface at the rim well 24. Such coupling already makes it possible to make the disc and the rim integral with each other by interference-fit.

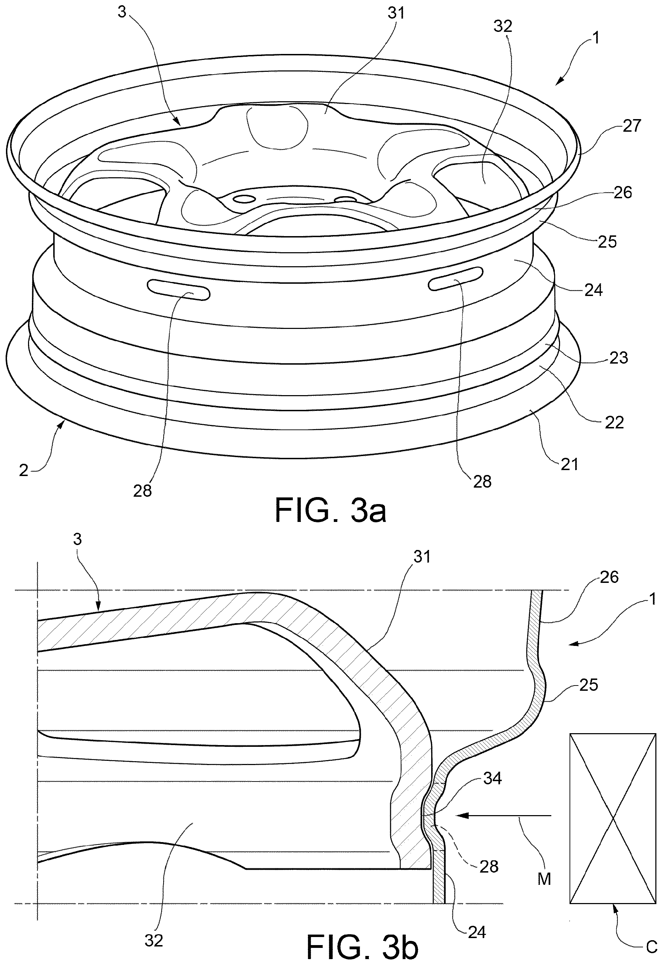

With reference to figures 3a and 3b, a magnetic pulse is then applied to deform areas 28 of the rim 2, respectively superimposing the recesses 34 of the connection part, so that the disc 3 is held in rotation and also axially by the deformed areas 28 of the rim 2, as well as by the interference-fit between the disc and rim. Figure 3b schematically represents a part of an electromagnetic coil C, arranged coaxially about the rim 2 and envisaged to generate the magnetic force M necessary for the magnetic crimping/welding of the two components. At the deformed areas 28 of the rim 2 there may also be a conventional weld between the two materials of the rim 3 and the disc 2. The impact of the material accelerated by the magnetic force on the other may in effect give rise to a weld by some combinations of impact velocity and impact angle between the two materials. This phenomenon is more difficult to obtain for thicker materials.

The function of the recesses 34 is therefore to create localized gaps between the disc and rim, necessary for the application of magnetic welding or crimping. The recesses 34 must be of such a geometry as to block the rotation between the two components (transfer of the rotational load) and also the axial movement (resistance to loosening). According to an embodiment, it is preferable that the bottom of the recess does not have flat portions, or at least that such portions have the shortest possible extension (considering the profile in cross-section of the recess).

In the example in figures 1-3, the recesses 34 are obtained by molding. Such production method, however, is not essential. For example, the recesses 34 may be obtained by machining, as is evident in the embodiment in figure 4.

Figures 5 and 6 represent another embodiment, which differs from those of figures 1-4 in that the disc is made of light alloy and is obtained by a mold casting process. The same reference numbers have been assigned to elements corresponding to those of the preceding embodiments.

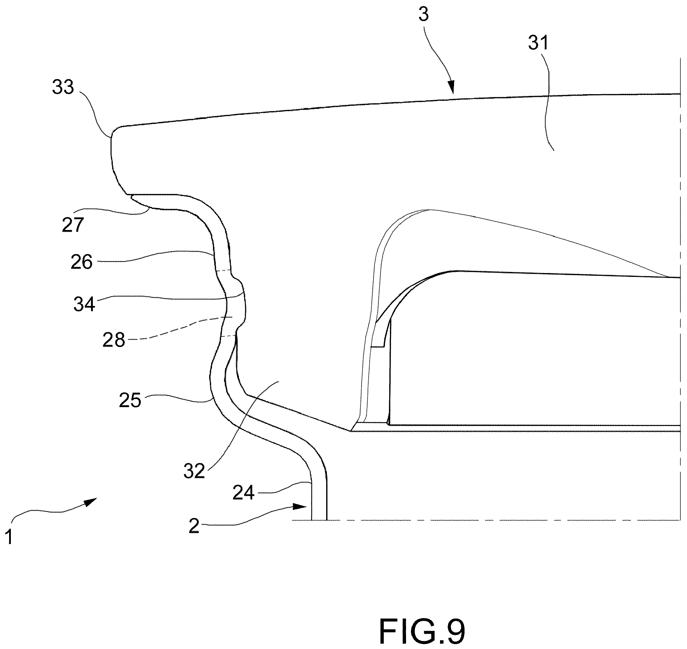

Furthermore, the rim 2 differs from that of the preceding embodiment in that the outer flange 27 is interrupted, and therefore the cover part 31 of the disc 3 comprises a radially outer edge 33 which, when the disc 3 is mounted on the rim 2, cooperates with the outer flange 27 of the rim 2 to define an outer flange profile of the wheel (see in particular figure 9).

In the embodiment of figures 5 and 6, the peripheral connection part 32 protruding axially from the cover part 31 is formed by a part of the peripheral ring of the disc that interconnects the spokes.

As may be seen in figure 6, when the disc 3 is fitted on the rim 2, the connection part 32 couples with a radially inner surface of the rim 2 at the outer bead seat 26. With the magnetic crimping/welding process, the deformed areas 28 are therefore created at the outer bead seat 26 of the rim 2.

The recesses 34 necessary for magnetic welding may be obtained by using undercuts in the casting mold used to make the disc 3. Alternatively, also in this case, the recesses 34 may be obtained on the disc 3 by machining.

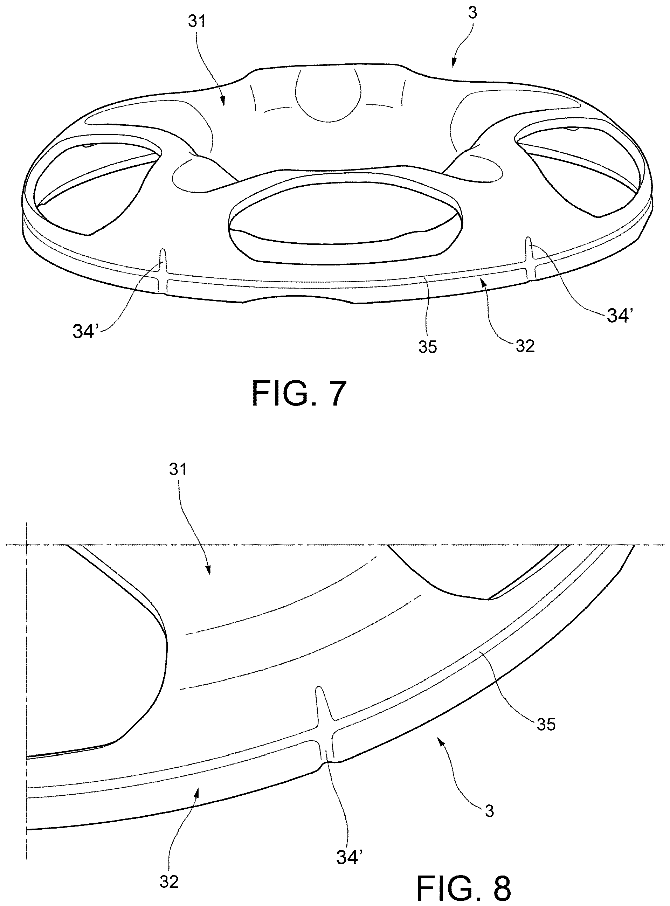

A further embodiment is shown in figures 7 and 8. The same reference numbers have been assigned to elements corresponding to those of the preceding embodiments.

In such embodiment, each recess 34' has an extension in the axial direction greater than its extension in the circumferential direction (in the embodiment of the preceding figures the opposite occurred). In the following, such recesses 34 will also be referred to as axial recesses.

In addition, there is provided a recess 35, hereinafter referred to as a circumferential recess, which extends along the entire perimeter of the connection part 32 of the disc and intersects and interconnects the axial recesses 34'. Instead of the plurality of circumferential recesses 34 of the preceding embodiments, obtained at the spokes, for ease of mechanical production, a single continuous circumferential recess 35 is obtained. The axial recesses 34' are thus made to prevent the disc from twisting within the rim. It is, however, provided that the magnetic pulse must be applied only at the axial recesses 34' and the areas of the circumferential recess 35 in proximity thereof (and thus at the end of each spoke) in order to avoid undesired deformations of the peripheral part of the disc at the windows between one spoke and another.

Naturally, other embodiments are possible, for example, an embodiment wherein the recess 35 has an extension less than that of the perimeter of the connection part 32 or is even absent, or embodiments that provide for axial recesses combined with circumferential recesses of the type represented in figures 1 to 6, possibly intersecting with each other.

## Claims

1. Method for manufacturing a vehicle wheel, comprising the following steps:
providing a rim (2) of metal sheet, comprising on its axially outer side an outer flange (27), an outer bead seat (26) and a retaining hump (25), as well as a rim well (24) connected to the outer bead seat (26) through the retaining hump (25),
providing a disc (3) of metal material, comprising a cover part (31) and a connection part (32) protruding axially from the cover part (31), wherein the cover part (31) comprises a plurality of spokes, angularly spaced, extending radially outwards from a central portion of the cover part (31), wherein, on the connection part (32), a plurality of recesses (34; 34') is obtained, said recesses being distributed in the circumferential direction of the connection part (32) in such a way that each recess is angularly aligned with a respective spoke,
interference-fitting the connection part (32) of the disc (3) to a radially inner surface of the rim (2), and
applying a magnetic pulse to deform an area (28) of the rim (2) respectively superimposing the recess (34; 34') of the connection part (32) in such a way that the disc (3) is rotationally and axially held by said deformed area (28) of the rim (2), as well as by the interference-fitting between the connection part (32) of the disc (3) and the radially inner surface of the rim (2).

2. Method according to claim 1, wherein said magnetic pulse further produces a weld between the rim (2) and the disc (3) at the deformed areas (28) of the rim (2).

3. Method according to one of the preceding claims, wherein the deformed areas (28) of the rim (2) are arranged at the outer bead seat (26).

4. Method according to one of claims 1 and 2, wherein the deformed areas (28) of the rim (2) are arranged at the rim well (24).

5. Vehicle wheel (1) obtained with a method according to any of the preceding claims, and including
a rim (2) made of metal sheet, comprising, on its axially outer side, an outer flange (27), an outer bead seat (26) and a retaining hump (25), as well as a rim well (24) connected to the outer bead seat (26) through the retaining hump (25), and
a disc (3) made of metal material, comprising a cover part (31) and a connection part (32) protruding axially from the cover part (31), wherein the cover part (31) comprises a plurality of spokes, angularly spaced, extending radially outwards from a central portion of the cover part (31), wherein, on the connection part (32), a plurality of recesses (34; 34') are obtained, said recesses being distributed in the circumferential direction of the connection part (32) in such a way that each recess is angularly aligned with a respective spoke,
wherein the connection part (32) of the disc (3) is interference-fitted with a radially inner surface of the rim (2),
wherein the rim (2) has a plurality of deformed areas (28) respectively superimposing the recesses (34; 34') of the connection part (32) in such a way that the disc (3) is rotationally and axially held by said deformed area (28) of the rim (2), as well as by the interference-fitting between the connection part (32) of the disc (3) and the radially inner surface of the rim (2).

6. Wheel according to claim 5, wherein the rim (2) and the disc (3) are also welded to each other at the deformed areas (28) of the rim (2), by said magnetic pulse.

7. Wheel according to claim 5 or 6, wherein the deformed areas (28) of the rim (2) are arranged at the outer bead seat (26).

8. Wheel according to claim 7, wherein the cover part (31) of the disc (3) comprises a radially outer edge (33) cooperating with the outer flange (27) of the rim (2) to define an outer flange profile of the wheel.

9. Wheel according to claim 5 or 6, wherein the deformed areas (28) of the rim (2) are arranged at the rim well (24).
